# EUROPEAN PATENT APPLICATION

(11) **EP 1 894 897 A2**
(43) Date of publication of application: **05.03.2008**
(21) Application number: 07114063.6
(22) Date of filing: 09.08.2007
(51) Int. Cl.: C03B 33/037

(54) **Electronically controlled work centre for automated processing of plates of glass or stone material, prearranged for loading and unloading plates set vertically**

(30) Priority: 04.09.2006 IT TO20060632
(71) Applicant: BIESSE S.p.A., 61100 Pesaro (IT)
(72) Inventor: Belli, Marco, 61100 Saltara (Pesaro Urbino) (IT); Frongia, Marco, 61100 Pesaro (IT)
(74) Representative: Notaro, Giancarlo

(57) **Abstract**

An electronically controlled work centre for the processing of plates (L) of glass or stone material comprises a bench (2), on which there operates a working head (6) that can be displaced in two mutually orthogonal horizontal directions (X, Y). The resting surface of the plate to be processed on the bench is defined by a movable structure (8), mounted oscillating about a horizontal axis between an operative position on the bench and an inoperative vertical position or in any case a position inclined with respect to the vertical by an angle of less than 45°.

## Description

### TEXT OF THE DESCRIPTION

The present invention relates to electronically controlled work centres for automated processing of plates of glass or stone material, such as marble or granite, of the type comprising:
- a bench having a horizontal surface for resting of the plates to be processed;
- an overhead travelling cross-member surmounting the bench, extending in a first horizontal direction (X) and mounted movable at its ends above a fixed supporting structure in a second horizontal direction (Y) orthogonal to the first;
- a carriage mounted movable on the overhead travelling cross-member in said first horizontal direction (X);
- a working head mounted on the carriage, carrying a spindle provided with means for coupling with a processing tool;
- first, second, and third motor means for controlling the movements of the overhead travelling cross-member and of the carriage, and for controlling a rotation of the spindle, respectively; and
- an electronic processing and control system of said motor means.

Work centres of the type specified above have been produced and used for some time now. Usually, the working head also has a degree of freedom in the vertical direction (Z) with respect to the carriage on which it is mounted, in which case motor means are also provided for controlling the vertical movement of the head, also controlled by the aforesaid electronic processing and control system.

In machines of a more conventional type, loading of the plates to be processed on the bench and unloading of the processed plates from the bench is carried out manually. In this connection, the operator makes use of suction-cup units, which can be positioned on the bench for withholding the plate on the bench during processing. Suction-cup units are constituted by independent blocks, which can be positioned as desired on the bench, according to the dimension and the shape of the plate to be processed, each block being provided with suction-cup members at its two opposite ends. Said suction-cup members can be set in communication with a source of negative pressure, through a connection hose associated to each block, so as to be activated and to carry out, one clamping of the individual suction-cup block on the resting surface of the bench, and the other clamping of the plate to be processed above the block.

In order to prevent problems linked to waste of time, and consequently of productivity, which occur with machines in which the operations of loading and unloading of the plates are carried out manually, as well as in order to improve the degree of operator safety, work centres have already been proposed of the type referred to above, in which loading and unloading of the plates is carried out automatically. In particular, work centres are already available on the market, in which the resting surface of the plates on the bench is constituted by two separate platforms set alongside one another, each of which can be displaced between an operative position on the bench and an inoperative position displaced on one side of the bench with respect to the operative position, for facilitating loading of the plates to be processed or unloading of the processed plates. In said known solution, each of said platforms is slidably mounted horizontally between said operative position and said inoperative position, and when a platform is in its inoperative position it projects in cantilever fashion from the bench, on the outside of the working area, so that it enables the operator to carry out the operations of loading and unloading in total safety outside the working area. Furthermore, in the aforesaid known solution, the operations of loading and unloading are not detrimental to the productivity of the machine, in so far as whilst one of the two platforms is in its inoperative position, enabling an operation of loading of a new plate to be processed, or of unloading of a previously processed plate to be carried out, the other platform is in its operative position, so as to enable the machine to carry out processing of the plate positioned thereon, without any dead times due to the aforesaid operations of loading and unloading. Said known machine presents, however, the drawback of requiring a greater space in plan view, on account of the fact that in the inoperative position each movable platform projects almost for its entire extension outside of the bench of the machine. Furthermore, it only partially achieves the purposes of enabling easy and fast operations of loading and unloading, since it is always necessary to transfer the plates (manually or with the aid of automatic equipment) between the vertical position, in which they are on the storage structures adjacent to the machine, and the horizontal position on the movable platform.

There have also been proposed work centres of the type referred to above, in which the resting surface of the plates on the bench is defined by a platform, which turns about a vertical axis having two sectors diametrally opposite, which occupy each time one the working area and the other the areas for loading and unloading the plates. Also said machines present, however, the drawbacks that have been set forth above of excessive encumbrance and insufficient simplification of the operations for loading and unloading of the plates.

The purpose of the present invention is to provide a work centre of the type referred to above that will be able to overcome the drawbacks set forth above.

With a view to achieving said purpose, the subject of the invention is a work centre having the characteristics that have been described at the start of the present description, of the type in which the resting surface for the plates is defined by at least one structure movable with respect to the bench between an operative position surmounting the bench and an inoperative position displaced on one side of the bench with respect to the operative position, for facilitating loading of the plates to be processed or unloading of the processed plates, said work centre being characterized in that, in the aforesaid inoperative position of the movable structure or each movable structure, the latter defines a plane for resting of the plates that is substantially vertical.

Thanks to said characteristic, there is simultaneously achieved both the advantage of not increasing appreciably the encumbrance in plan view of the machine with respect to a similar machine of a conventional type, i.e., without the aforesaid movable structure, and the advantage of rendering the operations of loading of a plate on a movable structure or unloading of a plate from the movable structure very simple and fast since the plate is positioned on the movable structure, when this is in its inoperative position, keeping it substantially vertical, i.e., without modifying substantially its orientation with respect to the orientation that the plate has on the storage equipment that is provided adjacent to the machine.

In the preferred embodiment of the invention, the aforesaid movable structure, or each movable structure, which defines the resting surface for the plates is mounted oscillating, about a horizontal axis, between the aforesaid operative position and the aforesaid inoperative position, on a structure fixed with respect to the bench.

Preferably, motor means are provided for controlling oscillation of the movable structure or each movable structure. Furthermore, once again in the specific case of the preferred embodiment, the aforesaid horizontal axis of oscillation of the movable structure or each movable structure is set parallel to the longitudinal direction of the overhead travelling cross-member of the work centre and is adjacent to a side of the bench that extends parallel to said longitudinal direction. More specifically, once again with reference to the preferred embodiment, the movable structure, or each movable structure, has an end part mounted oscillating about said axis on the fixed structure, and a main part extending in cantilever fashion from the aforesaid end part so that a rotation of the movable structure about its axis of oscillation displaces said main part between a substantially horizontal operative position, surmounting the bench of the machine, and a substantially inoperative vertical position.

Once again in the preferred embodiment, two movable structures are provided set alongside one another, mounted oscillating about the same axis of oscillation and designed to define each a resting surface of the plates. The two structures are movable independently of one another in such a way as to prevent any dead times due to the operations of loading and unloading of the plates since the system can be prearranged for having one of the two structures once again in the operative position so as to enable processing of the plate prearranged thereon whilst the other structure is in an inoperative position for loading of a new plate to be processed or unloading of a previously processed plate. The movable structure will be built in such a way as not to be extremely rigid in so far as the gripping of the piece in the processing step will be entrusted to the suction-cup units connected to a source of negative pressure.

According to a further characteristic of the invention, the movable structure or each movable structure comprises position-reference means for positioning a plate thereon in a position determined in the two directions of resting surface of the plate, and means for clamping the plate in said position. Furthermore, each movable structure is provided with means for clamping said movable structure on the bench when the structure is in its operative position.

In the preferred embodiment, both the means for clamping the plate on the movable structure and the means for clamping the movable structure in its operative position on the bench are made up of one or more suction-cup units carried by the movable structure and connectable to a source of negative pressure. Preferably, each suction-cup unit has opposite ends bearing suction-cup members connectable to a source of negative pressure so that each unit is used both for clamping a plate on the movable structure and for clamping the movable structure in its operative position on the bench.

According to a further characteristic of the invention, the aforesaid suction-cup units may be adjusted in position on the movable structure. In the preferred embodiment, each suction-cup unit is slidably mounted on an elongated guiding element that is in turn slidably mounted on the frame of the movable structure in a direction orthogonal to the longitudinal direction of the guiding element.

Furthermore, the means of reference described above, with which the movable structure or each movable structure is provided, comprise a plurality of reference elements, each of which can be adjusted in position on the movable structure. In the case of the preferred embodiment, also the aforesaid reference elements are slidably mounted on the aforesaid elongated guiding elements, on which the suction-cup units are mounted.

Thanks to the aforesaid characteristics, the work centre according to the invention enables execution of the operations of loading and unloading of the plates in an extremely simple, convenient and fast way. When a new plate to be processed is to be positioned above a movable structure, the latter is in its inoperative position defining a substantially vertical resting surface. Consequently, the operation of transfer of the plate from the storage equipment, in which it is also oriented vertically, to the movable structure of the machine is extremely simple and also easy to automate.

Of course, where in the present description reference is made to a "substantially vertical" position of the plate of glass it is intended to include both the case of an exactly vertical position and the case of a position inclined by a considerable angle, but in any case less than 45°, with respect to the vertical. The inclined position is in actual fact the one normally used also in the storage equipment in order to exploit the weight of the plate to guarantee a sufficient stability of positioning of the plate.

Before the new plate to be processed is positioned on the movable structure that is in the inoperative position, the suction-cup units are prearranged in the most suitable positions, according to the dimension and shape of the plate to be loaded, and the same applies of course for the reference elements, which usually comprise at least two reference elements on which the plate rests with its bottom edge and at least one further reference element, against which the plate is to be brought into contact laterally when it is positioned on the movable structure in the vertical condition. In this way, the position of the plate with respect to the bench when the movable structure is brought into its operative position is rigorously determined and controllable to guarantee the possibility of the control system of the machine to control correctly the execution of the operations of processing on the plate. When the plate is positioned on the movable structure in contact with the reference elements, the suction-cup units are activated for withholding the plate in the correct position on the movable structure, after which the movable structure is brought into its operative position on the bench, activating the suction-cup units that withhold the movable structure on the bench in said operative position. Once said condition is reached, the processing of the plate can start, so that the control system of the machine actuates the working head according to a programmed processing cycle. In the meantime, the other movable structure with which the machine is provided can be brought into the inoperative position to enable unloading of a previously processed plate. Said operation requires, of course, initially deactivation of the suction-cup units that withhold the movable structure on the bench, then rotation of the movable structure into its inoperative position, deactivation of the suction-cup units that withhold the plate on the movable structure, and the consequent possibility of picking-up (either manually or by means of automatic equipment) of the plate from the movable structure.

All the aforesaid operations can be carried out in total safety from the point of view of the operators, since each movable structure is on the outside of the working area when it is in its inoperative position, prearranged for loading and unloading of the plates. Preferably, there is purposely provided an enclosure of the working area, with sliding doors that can be closed so as to isolate the working area and leave the movable structure that is in its inoperative position on the outside of said enclosure.

Since the displacement of each movable structure into the inoperative position occurs through an oscillation from the horizontal position on the bench to a vertical position on one side of the bench, the encumbrance of the machine in plan view is substantially identical to that of a machine of a conventional type not equipped with a movable structure for loading and unloading the plates. The work centre according to the invention consequently also guarantees said additional advantage.

When necessary, in the case of plates of large dimensions, the two movable structures can be kept coplanar with respect to one another (by mechanical connection means or electronically by controlling their position synchronously) so as to obtain a single structure, on which one or more plates of large dimensions can be positioned.

Further characteristics and advantages of the invention will emerge from the ensuing description with reference to the annexed plates of drawings, which are provided purely by way of non-limiting example and in which:
- Figures 1 and 2 illustrate in perspective view the preferred embodiment of the work centre according to the invention, in two different operating steps;
- Figure 3 is a cross-sectional view of the work centre of Figure 1 in a plane orthogonal to the direction X of Figure 1;
- Figure 4 is a schematic perspective view, at an enlarged scale, of one of the two movable structures forming part of the work centre of Figures 1 and 2,
- Figure 5 is a perspective view at an enlarged scale of an alternative embodiment of a detail of Figure 4; and
- Figures 6 and 7 are a cross-sectional view at an enlarged scale, in a plane orthogonal to the direction X of Figure 1, of one of the two movable structures of the work centre, in different operating conditions.

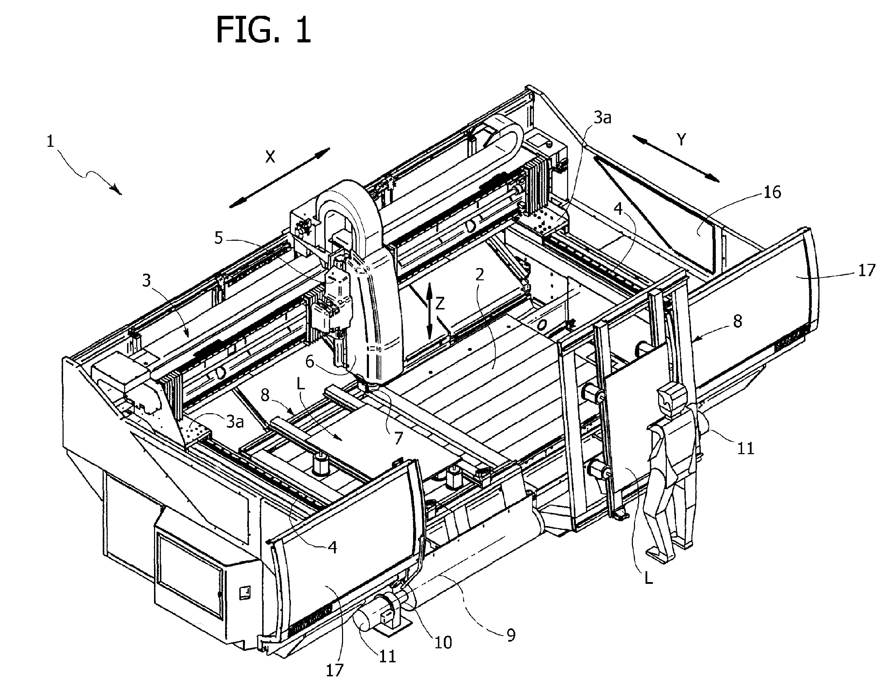

With reference to the drawings, the number 1 designates as a whole an electronically controlled work centre for the automated processing of plates of glass or stone material, such as marble or granite. The work centre 1 comprises a fixed bench 2 having a horizontal top surface for positioning of the plates to be processed. The bench 2 has two longitudinal opposite sides parallel to the horizontal direction designated by X in Figure 1, two opposite end sides parallel to the horizontal direction designated by Y in Figure 1, orthogonal to the horizontal direction X. An overhead travelling cross-member 3, extending in the direction X, is set above the bench 2 and has its opposite ends mounted on slides 3a, which can slide on two shoulders 4 set along the two end sides of the bench 2 and forming part of the fixed structure of the machine. The movement of the slides 3a along the shoulders 4 is governed by motor means of any type, controlled by the electronic control and processing unit with which the machine (not illustrated) is provided. The details of construction of the bench 2, of the overhead travelling cross-member 3, and of the means for controlling the movement of the overhead travelling cross-member 3 in the direction Y are not illustrated herein in so far as they can be made in any known way and in so far as they do not fall, taken in themselves, within the scope of the present invention. Furthermore, the elimination of said details from the drawings renders the latter more readily and easily understandable.

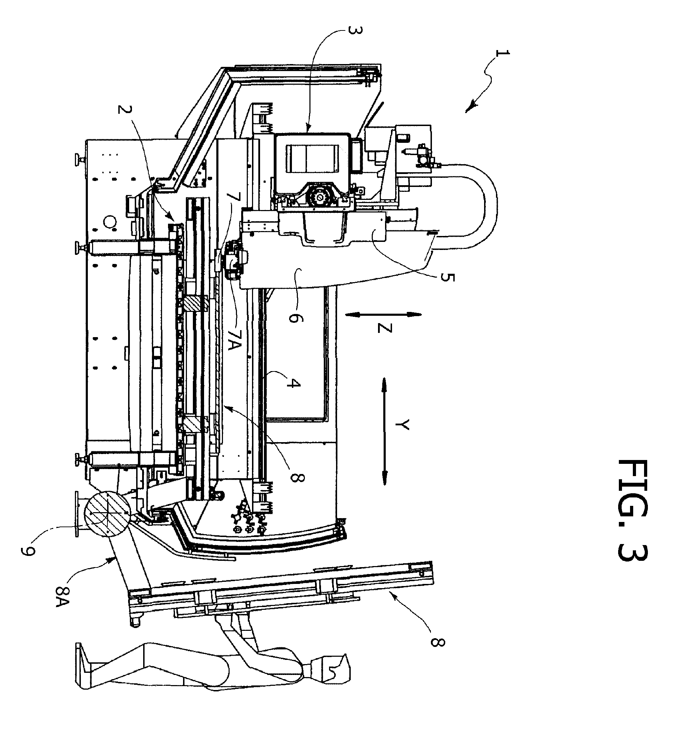

Once again in accordance with the known art, slidably mounted in the direction X above the overhead travelling cross-member 3 is a carriage 5, on which there is in turn slidably mounted in the vertical direction Z a working head 6, carrying a rotary spindle with vertical axis 7A (visible only partially in Figure 3), at the bottom end of which there can be coupled a processing tool 7 for processing plates that are positioned on the bench 2. As has been mentioned above for the bench 2 and the overhead travelling cross-member 3, also for the carriage 5, the working head 6, the spindle contained therein, and the motor means that is to govern movement of the aforesaid parts under the control of the control and processing unit of the work centre, the present drawings do not show the details of construction, since they can be made in any known way. Once again as in the conventional technique, the work centre can moreover envisage a tool magazine that enables the working head 6 to carry out automatically replacement of the processing tool 7 coupled to the spindle.

In accordance with the present invention, the resting surface of the plates on the bench 2 is defined by one or more movable structures 8 that can be displaced between an operative position on the bench and an inoperative position in which the operations of loading and unloading of the plates are facilitated. In the specific case illustrated, two movable structures 8 are provided, set alongside one another, which are mounted oscillating about one and the same axis 9 directed parallel to the direction X and adjacent to a longitudinal side of the bench defining the front side of the work centre, where the operations of loading and unloading of the plates are carried out.

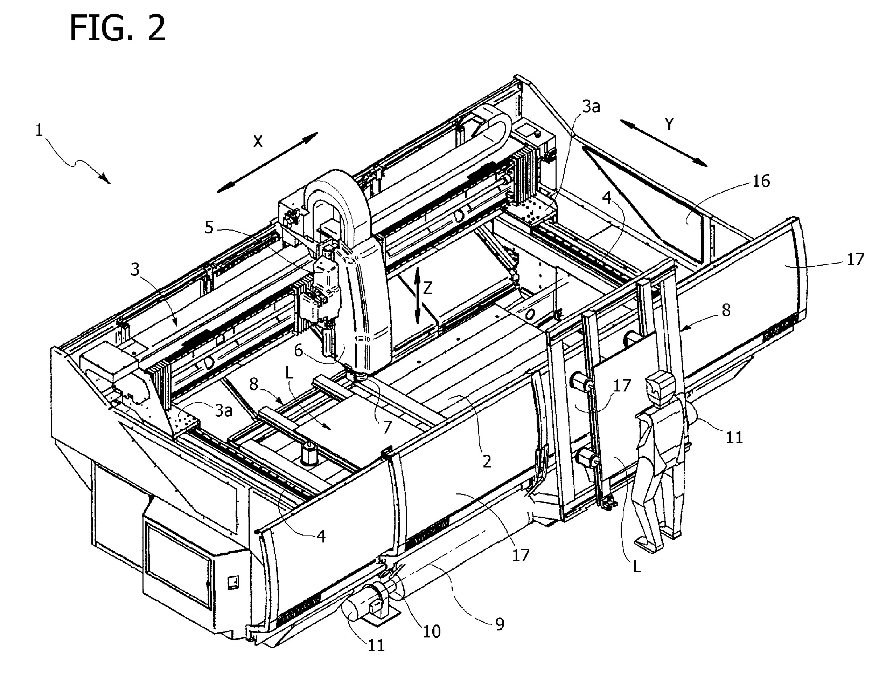

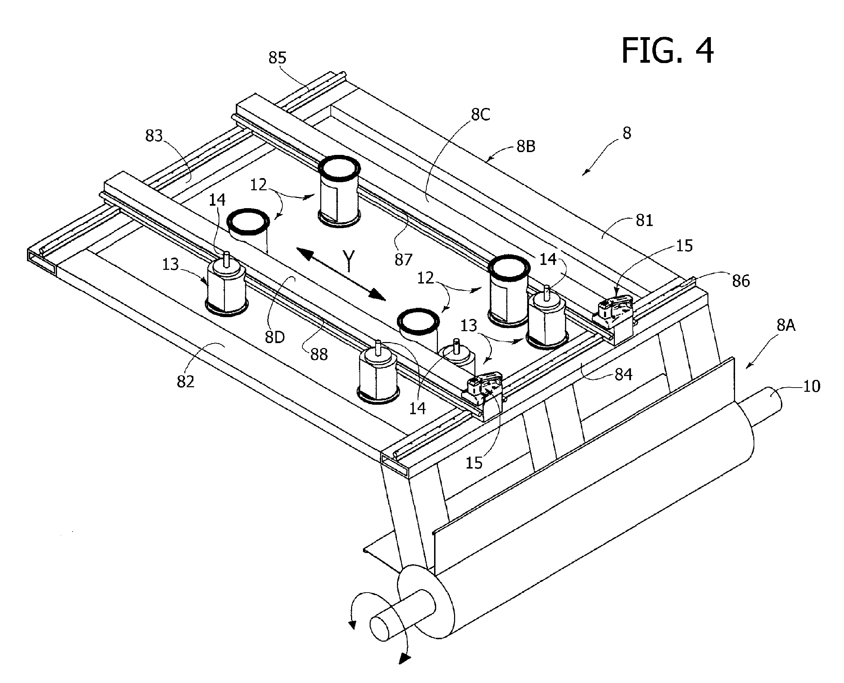

With reference to Figure 4, in the case of the example of embodiment illustrated, each movable structure 8 has an end part 8A that is connected to a shaft 10, set along the axis of oscillation 9 and governed in rotation about said axis by an electric engine 11 (see Figures 1 and 2). It is understood that obviously, instead of the engine 11, any other type of means of movement may be used. The structure 8 moreover comprises a main part 8B, which projects in cantilever fashion from the end part 8a and is constituted by a metal frame including two longitudinal beams 81, 82 joined at their ends by cross-members 83, 84. The cross-members 83, 84 carry rails or guides 85, 86, on which the ends of two longitudinal guiding elements 8C, 8D are slidably mounted. Each of said guiding elements carries in turn rail-type guiding means 87, 88, slidably mounted on which are both the units 12 that carry suction-cup members, the function of which will be illustrated in detail in what follows, and the units 13 that carry reference contrast elements 14.

The arrangement described above can envisage a single guiding element 8C, or a number of longitudinal guiding elements greater than two. Furthermore, each of said elements can be provided with any number of suction-cup units 12 or of reference units 13, slidably mounted thereon.

The arrangement described above enables adjustment of the position both of the suction-cup units 12 and of the reference units 13 in the two orthogonal directions of the plane defined by the frame of the part 8B. The movement of each unit can be automated, by means of motor means of any type, or else can be carried out manually, in which case lever clamping means 15 are provided for clamping each guiding element 8C, 8D and each of the units 12, 13 in the position selected.

The reference contrast elements 14 are used for positioning the plate above the structure 8 in a predetermined position and rigorously controlled along the two orthogonal axes of the resting surface on the structure 8 in order to guarantee that the plate is then in an operative predetermined position on the bench 2, to guarantee the precision of the processing carried out on the basis of the predetermined program entered in the control unit.

Each movable structure 8 can be displaced, via oscillation about the axis 9, between an operative position in which the main part 8B is set horizontal above the bench 2 and defines the resting surface of the plates during processing, and an inoperative position, substantially vertical, illustrated in Figures 1 and 2 for the structure 8 located further to the right, in which the operations of loading and unloading of the plate are facilitated.

The pre-arrangement of two movable structures 8 independently of one another enables reduction or elimination of any dead times, in so far as the system can be set to guarantee that one of the two movable structures 8 is once again in the operative position, enabling the working head 6 to carry out the programmed processing. Whilst the working head 6 is processing a plate L positioned above a movable structure 8 that is in the operative position above the bench 2, the other structure 8 is in the inoperative position (see Figure 1) so as to enable unloading of the plate previously processed and loading of a new plate to be processed. The invention, however, is applicable also to the case of a single movable structure 8, since also in this case the advantages of reduced encumbrance and greater ease of loading and unloading of the plates are in any case achieved.

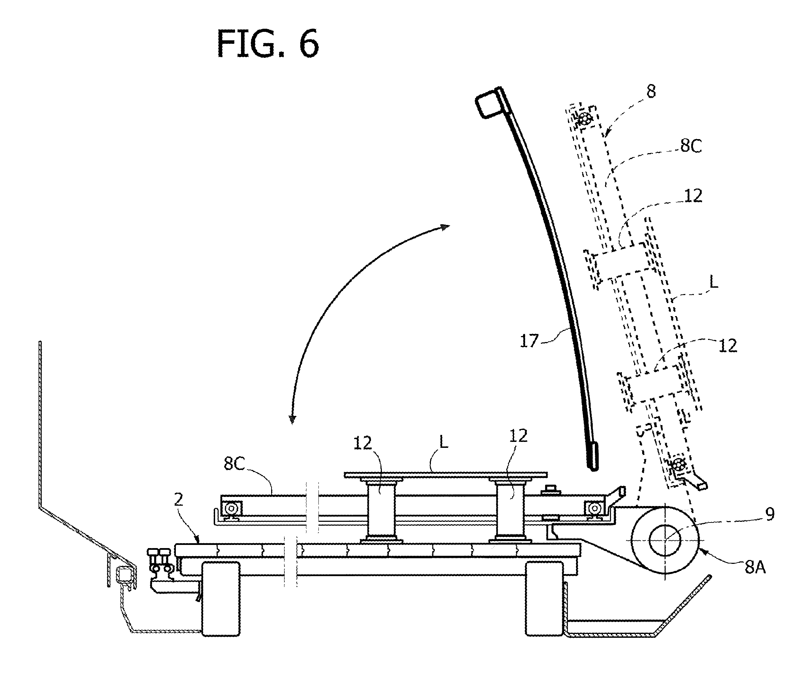

Each of the suction-cup units 12 is preferably built, in a way in itself known, with its two opposite ends provided with respective suction-cup members, connectable, independently of one another, for example by means of hoses (not illustrated), with a source of negative pressure. The communication with the source of negative pressure is opened when it is desired to activate the respective suction-cup members. In this way, the units 12 that are illustrated in Figure 4 carry out, with their top ends, clamping of the plate above the structure 8, and, with their bottom ends, clamping on the bench 2 of the structure 8, when this is in its operative position on the bench (see Figure 6) .

The reference contrast elements 14 are used for positioning the plate L correctly on the structure 8, prior to activation of the suction-cup units 12. Two of said contrast elements 14 are used for resting of the bottom part of the plate L, which is held against said contrast elements by the force of gravity, thanks to the vertical orientation of the plate in the loading position (see right-hand part in Figure 1), whilst at least one further reference contrast element 14 (Figure 4 illustrates two of them) are provided for contact of a side edge of the plate L in order to refer said plate in the horizontal direction when it is positioned on the structure 8, prearranged vertically. In the case where the movement of adjustment of the reference contrast elements is not motor-driven, it is possible to envisage graduated reference scales for the operator along at least one of the guides 85, 86 and along the guides 87, 88.

For greater safety of the operator, the work centre 1 is provided with an enclosure 16 that isolates the working area from the outside and includes, on the front side of the machine, two sliding doors 17, which can be displaced between an open position (Figure 1) and a closed position (Figure 2), in which the movable structure 8 that is in the inoperative position remains on the outside of the enclosure (Figure 2). In this way, maximum safety of the operator during the operations of loading and unloading of the plates L is guaranteed. As will be illustrated in detail in what follows, the arrangement is preferably such that, whilst one movable structure 8 is in the inoperative position, to enable loading of a plate thereon, or unloading of a plate therefrom, the other movable structure 8 is in the operative position, so as to enable processing of the plate carried thereon. In this way, there is no loss of productivity on account of the need to carry out the operations of loading and unloading, and at the same time said operations can be carried out in total safety for the operators, given that the loading and unloading area is completely separate and isolated from the working area.

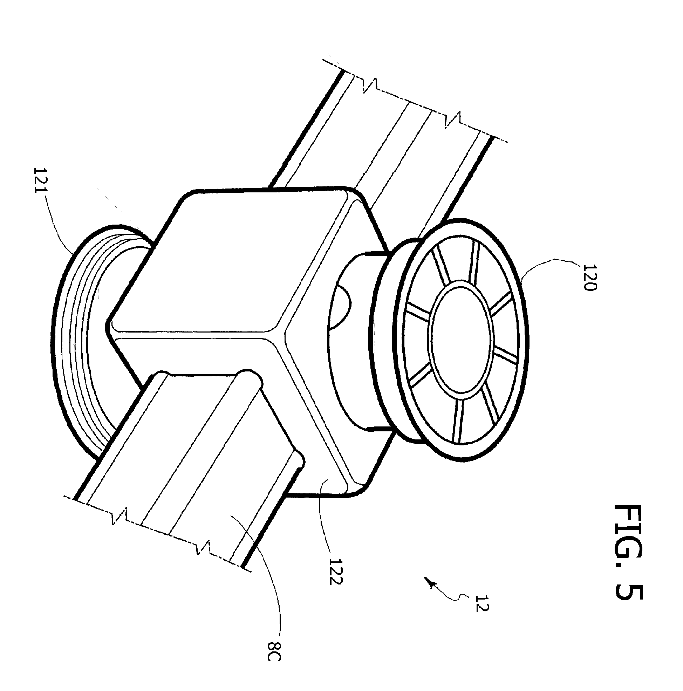

Figure 5 illustrates an alternative embodiment of a suction-cup unit 12 provided, at its opposite ends, with suction-cup members 120, 121 and a central body 122, slidably mounted on the respective guiding element 8C.

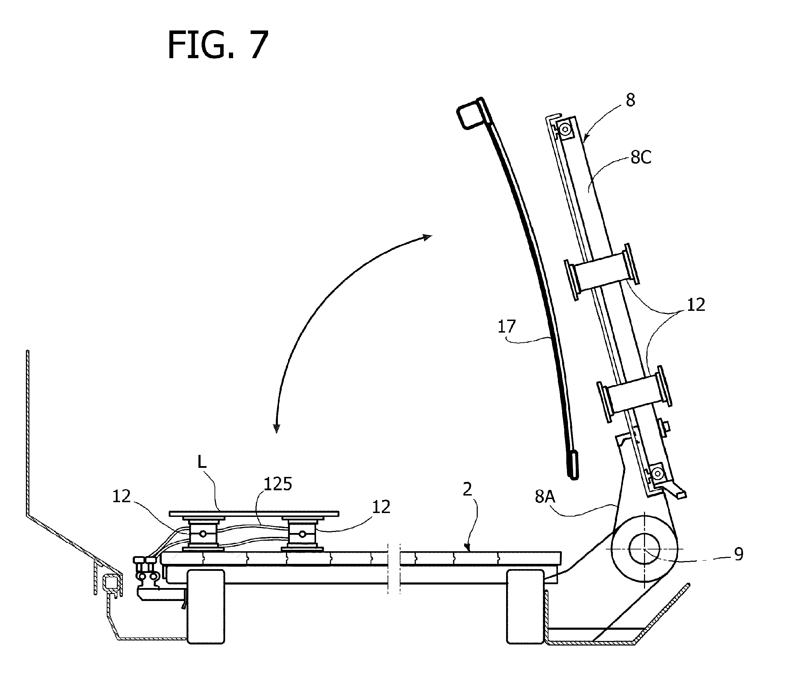

With reference to Figure 7, the machine also enables positioning of a plate L directly above an area of the top surface of the bench 2, with the movable structure 8 that covers said area in the inoperative position, making use of suction-cup units 12 of a conventional type, connected by means of hoses 125 to a source of negative pressure and resting directly on the bench. In other words, the work centre can in any case be used in the traditional way.

Operation of the work centre presented above is described in what follows.

In the condition illustrated in Figure 1, the doors 17 are open, in so far as one of the two movable structures 8 (illustrated further to the left in the drawing) has just been brought from its vertical inoperative position, in which it had received a plate L to be processed, into its operative position (illustrated in Figure). In said condition, the structure 8 is blocked by means of the respective suction-cup units 12 on the top surface of the bench 2. The other movable structure 8 (illustrated further to the right in the figure) bearing a plate L that has been previously processed, has been brought from its operative horizontal position into its inoperative vertical position (illustrated in the drawing) to enable unloading of the processed plate by it, after prior deactivation of the suction-cup units 12 carried thereby. The operation of unloading is performed without wasting time in terms of the production cycle for the machine in so far as the doors 17 can in the meantime be reclosed (Figure 2) so as to put the operator in conditions of safety. Starting from this moment, whilst the operator carries out the operation of unloading of the processed plate and of loading of a new plate to be processed, the control system of the machine actuates the working head 6 for carrying out processing of the plate L that is on the bench 2.

The example illustrated in the drawings refers to the case where the operations of loading and unloading of the plate are carried out manually by the operator. However, it is also possible to adopt automated equipment of any known type, to transfer the processed plate from the structure 8 that is in the inoperative position to a storage equipment (not illustrated) adjacent to the machine, and to transfer a new plate to be processed from the storage equipment to the movable structure 8. Whether the operations of loading and unloading are carried out manually or carried out using automated equipment, they are extremely simple and fast, since the movable structure 8 in its inoperative position keeps the plate in a substantially vertical position, as also vertical is the orientation of the plate in the storage equipment. Of course, as already mentioned above, where reference is made, in the present description, to a "vertical" or "substantially vertical" position of the plate, this is meant to comprise both the case of exactly vertical positioning and the case of a positioning rotated with respect to the vertical by an angle in any case of less than 45°. In the case of positioning that is inclined with respect to the vertical, it is obviously preferable to exploit the weight of the plate to guarantee its stability of positioning both on the movable structure 8 and on the storage equipment. The advantage of simplification due to the vertical configuration of the plate on the movable structure 8 when this is in the inoperative position is evident also in the case of use of automated equipment for loading and unloading of the plate in so far as the conformation and the control of said structure are extremely simplified.

After the processed plate has been unloaded from the movable structure 8 that is in the inoperative position, a new plate to be processed can be positioned on said structure. As already mentioned, the reference contrast elements 14 are positioned in such a way as to guarantee precise positioning of the plate L on the movable structure 8 in the two orthogonal directions of the plane of said structure. Thanks to said solution, when the movable structure 8 is then brought into its operative position on the bench, there is recreated a situation similar to that of conventional machines, in which the resting surface of the bench is equipped with reference contrast elements to guarantee precise positioning of the plate in the two orthogonal directions on the resting surface of the bench.

Once the plate is positioned in contact with the reference contrast elements 14, the top ends of the suction-cup units 12 are activated for clamping the plate in said position on the movable structure 8.

All the aforesaid operations, as has been said, can be carried out in the cycle time, i.e., during execution of the operation of processing of the plate that is already on the bench 2, so that the operations of loading and unloading of the plate do not involve any loss of productivity. Furthermore, as may be seen, the advantage is achieved of guaranteeing for the operator maximum safety during the execution of the operations of loading and unloading of the plate, since, when the movable structure 8 is in its inoperative position, it is on the outside of the doors 17. The system according to the invention also presents the advantage of substantially not entailing any greater encumbrance in plan view of the machine as compared to a traditional work centre without movable structures for loading and unloading of the plates.

As soon as the processing cycle of the plate that is on the bench 2 is through, the working head 6 is brought into a standby position, the doors 17 open, and the two movable structures 8 reverse their position. The movable structure 8 that was previously in the operative position on the bench is made to oscillate, after prior deactivation of the bottom ends of the suction-cup units 12, into its inoperative vertical position, whilst the other movable structure 8, on which the plate that is to undergo processing had previously been loaded, is rotated into its operative position on the bench, in which it is blocked by means of activation of the bottom ends of the suction-cup units 12 that are in contact with the bench (Figure 6). As has been said, in this condition the condition of a conventional work centre is recreated, in which a plate to be processed is blocked in position above the resting surface of the bench, the precision of the positioning along the two orthogonal axes on said resting surface being ensured by the contact of the edges of the plate against the reference contrast elements 14. The doors 17 can at this point be closed to enable the immediate start of the new processing cycle by the working head 6, whilst on the movable structure 8 that has been brought into its inoperative position, on the outside of the doors 17, the same cycle of operations described above is carried out for unloading of the processed plate and loading of a new plate to be processed. The cycle proceeds then in the way already described, guaranteeing a reduction to a minimum of any dead times of the machine, which are thus in practice limited only to the time necessary for opening and the closing of the doors, for oscillation of the movable structures between their movable position and their inoperative position, and for the activation and deactivation, according to the cases, of the ends of the suction-cup units 12 that are to withhold the movable structure that is in the operative position on the bench 2.

As already mentioned (see Figure 7), the arrangement described above does not in any case exclude the possibility, in the case of particular dimensions and/or configurations of the plate, of arranging the plates directly on the resting surface of the bench 2, keeping the movable structure 8 that covers the corresponding area of the bench in the vertical inoperative position, and using suction-cup units 12 of a traditional type for clamping the plate L directly on the resting surface of the bench 2.

As emerges clearly from the foregoing description, the invention achieves the purpose of simplifying and at the same time rendering the operations of loading and unloading of the plates safe, without in practice increasing the encumbrance in plan view of the machine and through a relatively simple and low-cost structure. In the case of the embodiment that envisages more than one movable structure, there is moreover obtained the advantage, as has been said, of reducing to a minimum any dead times of the machine and of increasing the productivity of the machine, since the operations of loading and unloading of the plates on one movable structure can be carried out whilst the other movable structure is in the operative position, and the working head is active for carrying out a given work cycle.

As likewise already mentioned, in the case of a number of movable structures 8, it is possible to envisage mechanical connection means for connection of said structures or control means that cause a simultaneous and identical displacement of said structures, in order to exploit them for supporting together plates of large dimensions.

Of course, without prejudice to the principle of the invention, the details of construction and the embodiments may vary widely with respect to what is described and illustrated herein, purely by way of example, without thereby departing from the scope of the present invention.

## Claims

1. An electronically controlled work centre for automated processing of plates (L) of glass or stone material, of the type comprising:
- a bench (2) having a horizontal surface for the plates (L) to be processed;
- an overhead travelling cross-member (3) surmounting the bench, extending in a first horizontal direction (X) and mounted movable at its ends on a fixed supporting structure in a second horizontal direction (Y) orthogonal to the first;
- a carriage (5), mounted movable on the overhead travelling cross-member (3) in said first horizontal direction (X);
- a head (6), mounted on the carriage (5), carrying a spindle (7A) provided with means for coupling with a processing tool (7);
- first, second, and third motor means for controlling the movements of the overhead travelling cross-member (3) and of the carriage (5), and for controlling rotation of the spindle (7A), respectively; and
- an electronic processing and control system of said motor means,
in which the resting surface for the plates (L) is defined by at least one structure (8) that is movable with respect to the bench (2) between an operative position surmounting the bench (2) and an inoperative position displaced on one side of the bench (2) with respect to the operative position, for facilitating loading of the plates to be processed or unloading of the processed plates,
said work centre being **characterized in that** in the aforesaid inoperative position of the movable structure or each movable structure (8) this defines a plane for resting of the plates that is substantially vertical.

2. The work centre according to Claim 1,
**characterized in that** the structure or each structure defining the resting surface for the plates (L) is mounted oscillating, about a horizontal axis (9), between said operative position and said inoperative position, on a structure fixed with respect to the bench (2).

3. The work centre according to Claim 2,
**characterized in that** it comprises motor means or the like (11) for controlling oscillation of the movable structure or each movable structure (8).

4. The work centre according to Claim 2,
**characterized in that** the axis of oscillation (9) of the movable structure or each movable structure (8) is parallel to the longitudinal direction (X) of the overhead travelling cross-member (3) and is adjacent to a side of the bench extending parallel to said direction.

5. The work centre according to Claim 4,
**characterized in that** the movable structure or each movable structure (8) has an end part (8A), mounted oscillating on said axis (9) on the fixed structure, and a main part (8B) extending in cantilever fashion from said end part (8A), so as to surmount the bench when said structure is in its operative position.

6. The work centre according to any one of the preceding claims, **characterized in that** two movable structures (8) are provided, set alongside one another, designed to define each the resting surface of the plates (L) and each movable independently of the other between said operative horizontal position and said substantially inoperative vertical position.

7. The work centre according to any one of the preceding claims, **characterized in that** the movable structure or each movable structure (8) comprises:
- position-reference means (13, 14) for positioning the plate (L) thereon in a predetermined position in the two directions of the resting surface of the plate (L) on the movable structure (8); and
- means (12) for clamping the plate (L) in said position.

8. The work centre according to Claim 7,
**characterized in that** the movable structure or each movable structure (8) is provided with means (12) for clamping said structure (8) on the bench (2) when the movable structure is in its operative position.

9. The work centre according to Claim 8,
**characterized in that** said means for clamping the plate (L) on the movable structure (8) are made up of one or more suction-cup units (12) carried by the movable structure (8) and connectable to a source of negative pressure.

10. The work centre according to Claim 8,
**characterized in that** said means for clamping the movable structure (8) in its operative position on the bench (2) are made up of one or more suction-cup units (12) carried by the movable structure (8) and connectable to a source of negative pressure.

11. The work centre according to Claim 8,
**characterized in that** said movable structure (8) is provided with one or more suction-cup units (12), each having opposite ends bearing respective suction-cup members connectable to a source of negative pressure, so that each unit is used both for clamping a plate (L) on the movable structure (8) and for clamping the movable structure (8) in its operative position on the bench (2).

12. The work centre according to any one of Claims 8-11, **characterized in that** each suction-cup unit (12) can be adjusted in position on said movable structure (8) .

13. The work centre according to Claim 12,
**characterized in that** each suction-cup unit (12) is slidably mounted on an elongated guiding element (8C, 8D) carried by a frame (8B) of the movable structure (8).

14. The work centre according to Claim 13,
**characterized in that** said elongated guiding element (8C, 8D) is in turn slidably mounted on the frame (8B) of the movable structure (8) in a direction orthogonal to the longitudinal direction of the guiding element (8C, 8D).

15. The work centre according to Claim 7,
**characterized in that** said position-reference means comprise a plurality of reference elements (13, 14), each of which can be adjusted in position on the movable structure (8).

16. The work centre according to Claim 15,
**characterized in that** each reference element (13) is slidably mounted on an elongated guiding element (8C, 8D) carried by the movable structure (8).

17. The work centre according to Claim 16,
**characterized in that** said elongated guiding element (8C, 8D) is in turn slidably mounted on the frame (8B) of the movable structure (8) in a direction orthogonal to the longitudinal direction of the guiding element (8C, 8D).

18. The work centre according to Claim 7,
**characterized in that** the position-reference means (13, 14) and the means (12) for clamping the plate (L) on the movable structure (8) are carried by units slidably mounted on one or more elongated sliding elements (8C, 8D), parallel to one another, which are in turn slidably mounted on the frame (8B) of the movable structure (8) in the direction orthogonal to their longitudinal direction.

19. The work centre according to Claim 6,
**characterized in that** mechanical or electronic connection means are provided for maintaining the two movable structures (8) coplanar to one another so as to be able to use them as common supporting structure for one or more plates (L)

20. The work centre according to Claim 18,
**characterized in that** said elongated guiding elements (8C, 8D) can be displaced manually and clamped in position.

21. The work centre according to Claim 18,
**characterized in that** said sliding units (12; 13, 14) can be displaced manually and blocked in position.

22. The work centre according to Claim 18,
**characterized in that** said elongated guiding elements (8C, 8D) are motor-driven.

23. The work centre according to Claim 18,
**characterized in that** said sliding units (12; 13, 14) are motor-driven.
